(19) **Europäisches Patentamt**
**European Patent Office**
**Office européen des brevets**

(11) **EP 1 615 332 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(51) Int Cl.:
*H02P 6/16* (2006.01)     *G01D 5/14* (2006.01)
*G01D 5/16* (2006.01)     *G01D 5/249* (2006.01)

(21) Anmeldenummer: **05013636.5**

(22) Anmeldetag: **24.06.2005**

(54) **Verfahren zum Betreiben eines EC-Motors**

Method for operating an electronically commutated motor

Procédé de fonctionnement d'un moteur à commutation électronique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **10.07.2004 DE 102004033404**

(43) Veröffentlichungstag der Anmeldung:
**11.01.2006 Patentblatt 2006/02**

(73) Patentinhaber: **Schaeffler Technologies GmbH & Co. KG**
**91074 Herzogenaurach (DE)**

(72) Erfinder:
• **Kro, Sven-Jostein**
**77833 Ottersweier (DE)**
• **Berger, Reinhard, Dr.**
**77815 Bühl (DE)**

(56) Entgegenhaltungen:
**EP-A- 0 780 964     EP-A- 1 016 852**

• **PATENT ABSTRACTS OF JAPAN Bd. 2000, Nr. 05, 14. September 2000 (2000-09-14) -& JP 2000 060177 A (NIPPON DENSAN CORP), 25. Februar 2000 (2000-02-25)**
• **PATENT ABSTRACTS OF JAPAN Bd. 007, Nr. 018 (P-170), 25. Januar 1983 (1983-01-25) -& JP 57 175211 A (HITACHI KENKI KK), 28. Oktober 1982 (1982-10-28)**

## Beschreibung

Die Erfindung betrifft ein Verfahren zum Betreiben eines EC-Motors, der ein Primärteil mit einer Wicklung und ein Sekundärteil mit abwechselnd in zueinander entgegengesetzte Richtungen magnetisierten Magnetsegmenten aufweist, wobei mit Hilfe von an dem Primärteil angeordneten, mit den Magnetsegmenten zusammenwirkenden Magnetfeldsensoren eine Messsequenz erfasst wird, die mehrere, von der Relativposition zwischen Sekundärteil und Primärteil abhängige Messwertkombinationen aufweist, die jeweils eine der Anzahl der Magnetfeldsensoren entsprechende Anzahl von Messwerten umfassen, und wobei die Wicklung in Abhängigkeit von den Messwertkombinationen derart bestromt wird, dass sich das Sekundärteil relativ zu dem Primärteil bewegt, wobei die Absolutposition des Sekundärteils relativ zu dem Primärteil bestimmt wird, indem das Sekundärteil an einer Referenzposition positioniert wird, und wobei ein Absolutpositionswert, ausgehend von einem Referenzpositionswert bei jedem Auftreten eines Wechsels der Messwertkombination nachgeführt wird.

Ein derartiges Verfahren ist aus der Praxis bekannt. Dabei werden als Magnetfeldsensoren Hall-Sensoren verwendet, deren Messsignale einerseits für die elektronische Kommutierung der Wicklung des EC-Motors und andererseits auch für die Messung der Absolutposition, die das Sekundärteil relativ zu dem Primärteil aufweist, genutzt werden. Dadurch kann ein zusätzlicher Absolutwertsensor eingespart werden. Zur Bestimmung der Absolutposition wird zunächst eine Referenzposition mit bekannter Absolutposition angefahren. Die Referenzposition kann beispielsweise ein Anschlag sein, gegen den das Sekundärteil bei einer Referenzfahrt positioniert wird. An der Referenzposition wird der Absolutpositionswert auf den entsprechenden Referenzpositionswert, der beispielsweise den Wert null aufweisen kann, gesetzt. Danach wird der EC-Motor elektronisch kommutiert, um das Sekundärteil entsprechend einem Sollwertsignal einer übergeordneten Steuer- oder Regeleinrichtung relativ zu dem Primärteil zu positionieren, wobei der Absolutpositionswert bei jedem Auftreten eines Wechsels der Messwertkombination nachgeführt wird. In der Praxis können jedoch Fehler bei der Nachführung des Absolutpositionswerts auftreten, beispielsweise wenn die Messsignale der Magnetfeldsensoren durch EMV-Einstrahlung gestört sind und/oder in der Stromversorgung der Magnetfeldsensoren eine Störung auftritt. Wird durch eine derartige Störung der Absolutpositionssignal falsch nachgeführt, sind alle weiteren Absolutpositionswerte gegenüber der tatsächlichen Position verschoben. Bei Anwendungen, bei denen durch eine Fehlpositionierung des Sekundärteils relativ zu dem Primärteil eine Gefahr auftreten kann, wie zum Beispiel bei einem Elektromotor zum automatisierten Betätigen einer zwischen einem Verbrennungsmotor und einem mechanischen Schaltgetriebe in einem Kraftfahrzeug angeordneten Kupplung und/oder bei einem Elektromotor zum Verstellen einer Schaltwelle in einem automatischen Schaltgetriebe eines Kraftfahrzeugs wurden deshalb bisher über Bürsten mechanisch kommutierte Elektromotoren eingesetzt, die mit einem Absolutpositionsgeber ausgestattet sind. Mit einem derartige Absolutwertgeber kann auch nach einem Reset der elektronischen Steuerung der Kupplung bzw. des Schaltgetriebes die Absolutposition des Elektromotors bestimmt werden, ohne, dass eine Referenzfahrt erforderlich ist. Somit kann ein solcher Reset weitgehend unbemerkt von dem Benutzer des Kraftfahrzeugs auch während des Betriebs des Kraftfahrzeugs erfolgen, beispielsweise wenn die Stromversorgung des Kraftfahrzeug vorübergehend gestört oder aufgrund eines Defekts kurzzeitig ausgefallen war. Derartige absolute Positionsgeber sind jedoch relativ teuer und aufwändig.

In der EP 0 780 964 A2 wird ein elektronisch kommutierter Motor offenbart. Dieser elektronisch kommutierte Motor hat an seinem Rotor drei Rotorstellungssensoren, um entsprechend einer am Rotor vorgesehenen Information Rotorstellungssignale zu erzeugen, welche eine Kommutierung der im Stator des Motors fließenden Ströme ermöglichen. Jedem Kommutierungsvosrgang entspricht eine vorgegebene Kombination von Rotorstellungssignalen dieser Sensoren, und diese Kombinationen bilden zusammen eine erste Menge von Kombinationen. An der vorgegebenen Zone des Rotors sind Hilfsinformationen vorgesehen, welche zur Erzeugung von Drehzahlsignalen in den Rotorstellungssensoren dienen und bei der Erfassung durch die Rotorstellungssensoren außerhalb der Rotorstellungen, an denen Kommutierungen stattfinden, zu Kombinationen von Rotorstellungssignalen führen, die zusammen eine zweite Menge von Kombinationen bilden, wobei die Schnittmenge von erster Menge und zweiter Menge gleich Null ist.

Es besteht deshalb die Aufgabe, ein Verfahren der eingangs genannten Art zu schaffen, das es auf einfache Weise ermöglicht, Fehler bei der Absolutpositionswerterfassung zu erkennen.

Die Lösung dieser Aufgabe besteht nach Anspruch 1 darin, dass für eine in eine vorgegebene Richtung orientierte Relativbewegung zwischen dem Sekundärteil und dem Primärteil eine aus mehreren, nacheinander zyklisch zu durchlaufenden Sollwertkombinationen bestehende, jeweils eine der Anzahl der Magnetfeldsensoren entsprechende Anzahl von Sollwerten aufweisende Referenzsequenz ermittelt und gespeichert wird, dass anhand der Referenzsequenz, der an der Referenzposition aufgetretenen Messwertkombination und der Anzahl der seit dem Erreichen der Referenzposition aufgetretenen Wechsel in der Messwertkombination die dem Absolutpositionswert zugeordnete Sollwertkombination bestimmt wird, dass diese Sollwertkombina tion mit der für den betreffenden Absolutpositionswert ermittelten Messwertkombination verglichen wird, und dass beim Auftreten einer Abweichung zwischen der Sollwertkombination und der Messwertkombination ein Fehlerzustand erkannt wird. Nach dem Erkennen des Fehlerzustands wird mindestens ein erster Magnetfeldsensor ermittelt, dessen Messwerte von den entsprechenden Sollwerten der Sollwertkombination abweichen, wobei für den Fall, dass die Messwerte wenigstens eines zweiten Magnetfeldsensors mit den ihm zugeordneten Sollwerten der Sollwertkombination übereinstimmen, der Absolutpositionswert beim Auftreten eines Wechsels in den Messwerten des wenigstens einen zweiten Magnetfeldsensors unter Berücksichtigung des Ausfalls der Messwerte des mindestens einen ersten Magnetfeldsensors nachgeführt wird. Der Absolutpositionswert kann also auch mit einer gegenüber dem normalen Betrieb reduzierten Anzahl Messsignale nachgeführt werden. Dies kann beispielsweise dadurch erreicht werden, dass für die fehlerhaften Messwerte mit Hilfe der als richtig erkannten Messwerten Ersatzwerte bestimmt werden und der Absolutpositionswert mit Hilfe der Ersatzwerte nachgeführt wird. Dadurch ist es möglich, die Absolutposition auch bei einem Ausfall eines oder sogar mehrerer Magnetfeldsensoren zu bestimmen, um den EC-Motor beispielsweise in einem Notlaufbetrieb nach dem Auftreten eines Fehlerzustands weiter zu betreiben. Dabei wird eine eventuelle Abnahme der Genauigkeit der Absolutpositionswerte zumindest vorübergehend bis zum Durchführen der nächsten Referenzfahrt in Kauf genommen.

Eine weitere Lösung der Aufgabe besteht nach Anspruch 2 darin, dass für eine in eine vorgegebene Richtung orientierte Relativbewegung zwischen dem Sekundärteil und dem Primärteil eine aus mehreren, nacheinander zyklisch zu durchlaufenden Sollwertkombinationen bestehende, jeweils eine der Anzahl der Magnetfeldsensoren entsprechende Anzahl von Sollwerten aufweisende Referenzsequenz ermittelt und gespeichert wird, dass anhand der Referenzsequenz, der an der Referenzposition aufgetretenen Messwertkombination und der Anzahl der seit dem Erreichen der Referenzposition aufgetretenen Wechsel in der Messwertkombination die dem Absolutpositionswert zugeordnete Sollwertkombination bestimmt wird, dass diese Sollwertkombination mit der für den betreffenden Absolutpositionswert ermittelten Messwertkombination verglichen wird, und dass beim Auftreten einer Abweichung zwischen der Sollwertkombination und der Messwertkombination ein Fehlerzustand erkannt wird. Nach dem Erkennen des Fehlerzustands wird die Anzahl der Magnetfeldsensoren ermittelt, deren Messwert(e) von den entsprechenden Sollwerten der Sollwertkombination abweichen, wobei für den Fall, dass diese Anzahl einen vorgegeben Wert überschreitet, die Wicklung des EC-Motors zur Erzeugung eines magnetischen Wanderfelds mit einem vorgegebenen, von den Messwertkombinationen unabhängigen Ansteuerungsmuster angesteuert wird. Nach dem Erkennen eines derartigen Fehlerzustands wird der EC-Motor also wie ein Schrittmotor betrieben, wobei davon ausgegangen wird, dass das Antriebsmoment des Schrittmotors so groß ist, dass die Schritte, die an die Wicklung ausgegeben werden, von dem EC-Motor auch in eine entsprechende Relativbewegung zwischen Sekundär- und Primärteil umgesetzt werden.

Das Verfahren wird vorzugsweise in Form eines Betriebsprogramms auf einem Mikrocomputer ausgeführt. Dabei ist es sogar möglich, dass der Referenzpositionswert in einem nicht flüchtigen Speicher abgelegt wird, so dass er nach einem eventuellen Reset des Mikrocomputers weiterhin zur Verfügung steht. Nach einem Neustart des Mikrocomputers kann dann der Speicher ausgelesen werden, um die dem Absolutpositionswert zugeordnete Sollwertkombination zu bestimmen und mit einer während oder nach dem Neustart mit Hilfe der Magnetfeldsensoren ermittelten Messwertkombination zu vergleichen. Wenn dabei festgestellt wird, dass die Sollwertkombination mit der Messwertkombination übereinstimmt und die Relativgeschwindigkeit zwischen dem Sekundärteil und dem Primärteil sowohl beim Auslösen des Resets als auch nach dem Reset gleich null war, kann mit großer Wahrscheinlichkeit davon ausgegangen werden, dass das Sekundärteil zwischen der Bestimmung des letzten Absolutpositionswerts und der Erfassung der Messwertkombination relativ zu dem Primärteil seine Lage beibehalten hat, so dass der Absolutpositionswert weiterhin gültig ist. In diesem Fall kann eine Referenzfahrt, die beispielsweise bei einem EC-Motor zum Betätigen einer Kupplung ein Öffnen der Kupplung oder bei einem EC-Motor zum Betätigen einer Schaltwelle in einem Getriebe ein Positionieren der Schaltwelle in Neutralstellung und somit eine Zugkraftunterbrechung zur Folge haben kann, eingespart werden. Bei einem für eine derartige Anwendung vorgesehenen EC-Motor kann also während das Kraftfahrzeug fährt ein Reset des Mikrocomputers durchgeführt werden, ohne dass der Benutzer des Kraftfahrzeugs dies bemerkt.

Bei einer bevorzugten Ausführungsform der Erfindung wird der Absolutpositionswert bei jedem Wechsel in der Messwertkombination bei einer Vorwärtsbewegung des Sekundärteils um 1 erhöht und/oder bei einer Rückwärtsbewegung um 1 vermindert, wobei aus dem Absolutpositionswert und der Anzahl der gespeicherten Sollwertkombinationen mit Hilfe einer Modulo-Operation ein Index bestimmt wird, und wobei mit Hilfe des Index und der an der Referenzposition aufgetretenen Messwertkombination die dem Absolutpositionswert zugeordnete Sollwertkombination ermittelt wird. Auf diese Weise kann die dem Absolutpositionswert zugeordnete Sollwertkombination beispielsweise mit Hilfe eines Mikrocomputers auf einfache Weise bestimmt werden.

Vorteilhaft ist, wenn die Referenzposition nach dem Erkennen des Fehlerzustands erneut angefahren und der Absolutpositionswert an der Referenzposition auf den Referenzpositionswert gesetzt wird. Dabei kann die Referenzfahrt entweder gleich nach dem Detektieren des Fehlerzustands oder zu einem späteren Zeitpunkt durchgeführt werden. Bei einem EC-Motor, der zum Betätigen einer Kupplung oder zum Schalten eines Getriebes in einem Kraftfahrzeug dient, kann der EC-Motor nach dem Erkennen des Fehlerzustands zunächst eventuell im Notlaufbetrieb weiter betrieben werden, bis sich das Kraftfahrzeug in einem Betriebszustand befindet, bei dem die Referenzfahrt vom Benutzer des Kraftfahrzeugs weitgehend unbemerkt durchgeführt werden kann.

Bei einer bevorzugten Ausführungsform der Erfindung werden mit Hilfe der Messwerte mindestens eines Magnetfeldsensors und des zeitlichen Abstands, den diese Messwerte zueinander aufweisen, Geschwindigkeitswerte für die Relativgeschwindigkeit zwischen Primärteil und Sekundärteil bestimmt, wobei die einzelnen Geschwindigkeitswerte nach unterschiedlichen Messmethoden ermittelt werden, und wobei die jeweils anzuwendende Messmethode in Abhängigkeit von einem bei einer früheren Geschwindigkeitsmessung ermittelten Geschwindigkeitswert ausgewählt wird. Dabei werden die Messmethoden bevorzugt derart in Abhängigkeit von der Relativgeschwindigkeit zwischen Sekundärteil und Primärteil ausgewählt, dass bei einer geringen Relativgeschwindigkeit eine Messmethode zur Anwendung kommt, bei der eine relativ geringe Verzögerungszeit bei der Bestimmung der Geschwindigkeitswerte auftritt. Bei einer hohen Geschwindigkeit wird bevorzugt eine Messmethode gewählt, bei der die Geschwindigkeitswerte ein niedriges Rauschen bzw. eine geringe Schwankungsbreite aufweisen.

Zweckmäßigerweise werden bei mindestens einer Messmethode die Geschwindigkeitswerte mit einer festen Abtastrate aus den Messwerten des mindestens einen Magnetfeldsensors ermittelt, indem die Inkremente über die Abtastdauer gezählt und die Anzahl dann durch die Abtastdauer dividiert. Diese Messmethode wird bevorzugt bei geringen Relativgeschwindigkeiten zwischen Sekundär- und Primärteil angewendet. Die Auswertung kann schon ab dem ersten Inkrement ein Signal liefern.

Vorteilhaft ist, wenn bei mindestens einer Messmethode der Zeitabstand zwischen mindestens zwei Zeitpunkten, an denen ein Wechsel der Messwertkombinationen in der Messsequenz auftritt, ermittelt wird, wenn mit Hilfe der diesen Zeitpunkten zugeordneten Absolutpositionswerte die Wegstrecke bestimmt wird, über die das Sekundärteil zwischen den Zeitpunkten relativ zu dem Primärteil bewegt wurde, wenn aus dem Zeitabstand und der Wegstrecke ein Geschwindigkeitswert für die Relativgeschwindigkeit zwischen Primärteil und Sekundärteil bestimmt wird, und wenn die Auswahl der Zeitpunkte vorzugsweise in Abhängigkeit von einem Geschwindigkeitswert erfolgt, der bei einer früheren Geschwindigkeitsmessung ermittelt wurde. Dabei werden die Zeitpunkte bevorzugt derart auf die Relativgeschwindigkeit zwischen Sekundärteil und Primärteil abgestimmt, dass bei einer geringen Geschwindigkeit die Absolutwerte bevorzugt mit einer relativ geringen Verzögerungszeit und bei einer hohen Geschwindigkeit bevorzugt mit einem niedrigen Rauschen bzw. einer geringen Schwankungsbreite erfasst werden.

Vorteilhaft ist, wenn die Auswahl der Zeitpunkte, die der Bestimmung der Geschwindigkeitswerte zu Grunde gelegt werden, in Abhängigkeit von der Größe der Lagetoleranzen der Magnetsegmente, der Toleranzen in den Abmessungen und/oder in der Magnetisierung der Magnetsegmente ermittelt wird. Dabei ist es zum Beispiel möglich, dass beim Vorhandensein eines Magnetsegments, dessen Lage von einer für das Magnetsegment vorgesehenen Solllage abweicht, jeweils nur die dem betreffenden Magnetsegment zugeordneten Messsignalflanken ausgewertet werden, so dass die Lagetoleranzen den ermittelten Geschwindigkeitswert nicht beeinflussen.

Bei einer zweckmäßigen Ausgestaltung des Verfahrens wird bei einer Geschwindigkeit, die einen vorgegebenen Grenzwert unterschreitet, der Zeitabstand zwischen unmittelbar aufeinander folgenden Wechseln von Messwertkombinationen und bei einer Geschwindigkeit, die dem Grenzwert entspricht oder größer ist als dieser, der Zeitabstand zwischen Wechseln von Messwertkombinationen bestimmt wird, die in der Messsequenz voneinander beabstandet sind. Zu diesem Zweck können beispielsweise bei einer den Grenzwert unterschreitenden Geschwindigkeit die Zeitpunkte innerhalb aufeinander folgender Flanken eines Signals gelegt werden, das durch eine Exclusiv-Oder-Verknüpfung aus den Messsignalen der einzelnen Magnetfeldsensoren gebildet wird, während bei einer Geschwindigkeit, die dem Grenzwert entspricht oder größer ist als dieser, die Zeitpunkte innerhalb aufeinanderfolgender Flanken des Messsignals eines der Magnetfeldsensoren gelegt werden.

Nachfolgend sind Ausführungsbeispiele der Erfindung anhand der Zeichnung näher erläutert. Es zeigen:

Fig. 1 ein Blockdiagramm eines elektrischen Antriebs, der einen EC-Motor, eine Endstufe zur Ansteuerung des EC-Motors, Magnetfeldsensoren zur Lagebestimmung des EC-Motor-Läufers, und einen Mikrocomputer aufweist,

Fig. 2 eine Tabelle, in der beispielhaft einige, mit Hilfe der Magnetfeldsensoren und des Mikrocomputers ermittelte Absolutpositionswerte aufgelistet sind, wobei neben den Absolutpositionswerten jeweils ein diesen zugeordneter Index, eine Sollwert- und eine Messwertkombination sowie ein daraus abgeleiteter Fehlerzustandswert wiedergegeben ist,

Fig. 3 eine in einem Datenspeicher des Mikrocomputers abgelegte Referenzsequenz, bestehend aus sechs, mit einem Index nummerierten Sollwertkombinationen, die jeweils drei Sollwerte aufweisen,

Fig. 4 eine graphische Darstellung von Messsignalen der einzelnen Magnetfeldsensoren und eines Signals, dass durch eine Exclusiv-Oder-Verknüpfung der Messsignale gebildet wurde, wobei auf der Abszisse die Zeit und auf dar Ordinate die Amplitude aufgetragen ist,

Fig. 5 eine graphische Darstellung des tatsächlichen Drehzahlsignals eines EC-Motors und zweier nach unterschiedlichen Methoden ermittelter Drehzahlsignale, wobei auf der Abszisse die Zeit und auf dar Ordinate die Drehzahl aufgetragen ist,

Fig. 6 eine graphische Darstellung von Messsignalen, ähnlich Fig. 4, wobei das Messsignal des Sensors H1 gegenüber einer Solllage verschoben ist, wobei das mit XOR bezeichnete Signal durch Exclusiv-Oder-Verknüpfung der Messsignale gebildet wurde, wobei $n_{XOR}$ ein daraus abgeleitetes Geschwindigkeits- oder Drehzahlsignal ist, und wobei $n_{H1}$ ein aus dem Messsignal des Sensors H1 abgeleitetes Geschwindigkeits- oder Drehzahlsignal darstellt,

Fig. 7 eine graphische Darstellung von Messsignalen, ähnlich Fig. 6, wobei die Breite der Pulse des Messsignals des Sensors H1 von einem Sollwert abweicht, wobei $n_{H1}$ ein durch Auswertung des Abstands zweier in zueinander entgegengesetzte Richtungen weisender Flanken und $n_{H1\downarrow}$ ein durch Auswertung des Abstands zweier in die gleiche Richtung orientierter Flanken des Messsignals H1 abgeleitetes Geschwindigkeits- oder Drehzahlsignal bezeichnen, und

Fig. 8 eine graphische Darstellung von Messsignalen, ähnlich Fig. 7, wobei jedoch nur die die Breite eines, einem bestimmten Magnetsegment zugeordneten Pulses des Messsignals des Sensors H1 von dem Sollwert abweicht.

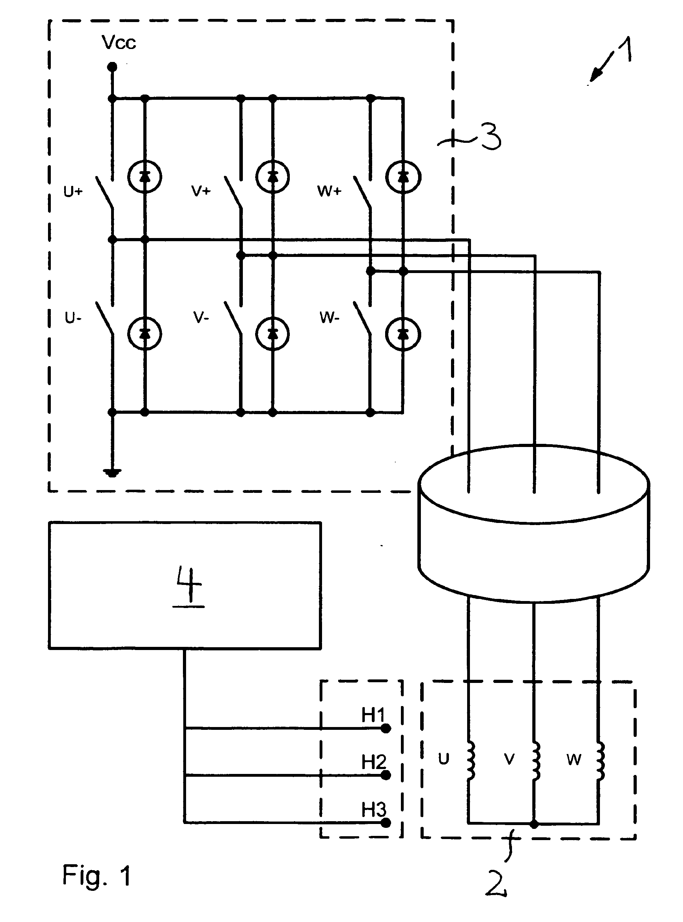

Ein in Fig. 1 schematisch in Form eines Blockdiagramms dargestellter elektrischer Antrieb 1 weist einen EC-Motor 2 auf, der in einem Kraftfahrzeug zum Ein- und Ausrücken einer Kupplung vorgesehen ist, die zwischen einem Verbrennungsmotor und einem mit den Rädern des Kraftfahrzeugs verbundenen mechanischen Schaltgetriebe angeordnet ist. Die Kupplung kann entweder indirekt mechanisch vom EC-Motor 2 oder über eine von dem EC-Motor 2 angetriebene hydraulische Kraftübertragungseinrichtung betätigt werden. Die hydraulische Kraftübertragungseinrichtung weist einen mit dem EC-Motor 2 in Antriebsverbindung stehenden Geberzylinder auf, der über eine Hydraulikleitung mit einem Nehmerzylinder verbunden ist. Dieser greift zum Verstellen der Kupplung an einem mechanischen Stellglied an. Zwischen dem Geberzylinder bzw. dem mechanischen Bauteil und dem EC-Motor kann ein Getriebe angeordnet sein, das eine zusätzliche Übersetzung bewirkt. Von Bedeutung ist, dass das mechanische Stellglied in einem sehr kleinen Wegbereich genau positionierbar ist.

In Fig. 1 ist erkennbar, dass der EC-Motor ein als Stator ausgebildetes Primärteil mit einer mehrphasigen Wicklung aufweist, die über eine Endstufe 3 mit der Stromversorgung des Kraftfahrzeugs verbunden ist. Die Endstufe weist mehrere zu einer Vollbrücke geschaltete Halbleiterschalter auf, die zur elektronischen Kommutierung der Wicklung von einem Mikrocomputer angesteuert werden.

Das Primärteil wirkt mit einem in der Zeichnung nicht näher dargestellten, als Läufer ausgebildeten Sekundärteil des EC-Motors 2 zusammen, das relativ zu dem Primärteil verdrehbar gelagert ist und an seinem Umfang eine Abfolge von abwechselnd in zueinander entgegengesetzte Richtungen magnetisierten permanentmagnetischen Magnetsegmenten aufweist.

An dem Primärteil sind mehrere, in Umfangsrichtung zueinander versetzte Magnetfeldsensoren H1, H2, H3 angeordnet, die als Hallsensoren ausgebildet sind und das Magnetfeld mindestens eines jeweils in ihrem Detektionsbereich angeordneten Magnetsegments detektieren. Mit Hilfe der Magnetfeldsensoren H1, H2, H3 wird eine Messsequenz erfasst, die mehrere, von der Relativposition zwischen Sekundärteil und Primärteil abhängige Messwertkombinationen aufweist. Bei einer Drehbewegung des Sekundärteils in eine vorgegebene Richtung weist die Messsequenz ein charakteristisches, durch die Anzahl und Anordnung der Magnetsegmente sowie die Anzahl und Anordnung der Magnetfeldsensoren H1, H2, H3 vorgegebenes Muster auf, das bei der Relativbewegung zyklisch durchlaufen wird und sich bei einer mechanischen Volldrehung des Sekundärteils so oft wiederholt, wie das Sekundärteil Polpaare aufweist.

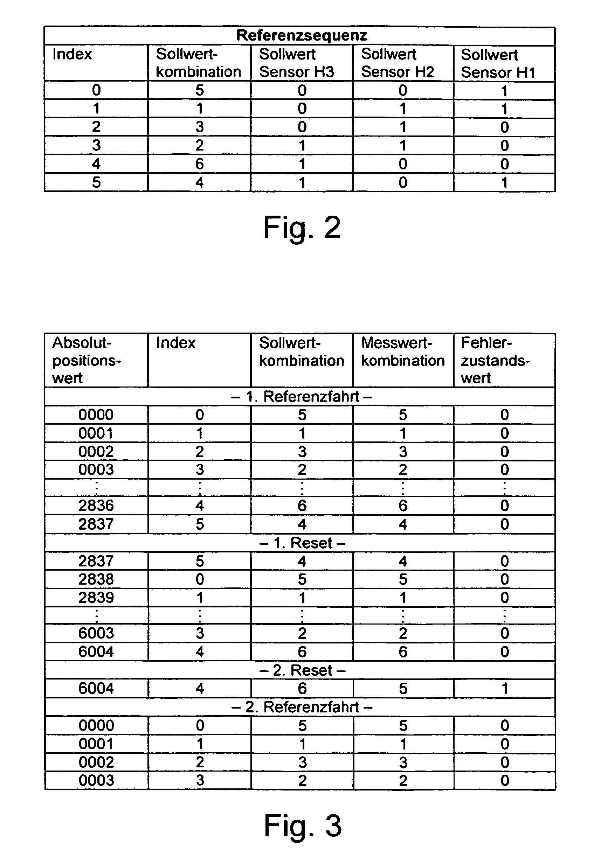

Bei dem in Fig. 1 gezeigten Ausführungsbeispiel hat der elektrische Antrieb 1 drei Magnetfeldsensoren H1, H2, H3, deren Messsignale jeweils die Werte ,0' oder ,1' annehmen können. Mit den Messwerten der drei Magnetfeldsensoren lassen sich maximal acht unterschiedliche Kombinationen 000, 001, 010, 011, 100, 101, 110 und 111 darstellen. Die Anordnung der Magnetsegmente und der Magnetfeldsensoren H1, H2, H3 ist derart gewählt, dass die Kombinationen 000 und 111 normalerweise bei der Relativbewegung zwischen dem Sekundärteil und dem Primärteil nicht auftreten. Bei einer Drehbewegung des Sekundärteils in eine vorgegebene Richtung werden somit sechs Messwertkombinationen zyklisch durchlaufen. Diese Kombinationen werden beispielsweise bei der Konstruktion des EC-Motors ermittelt und in einem Referenzsequenz-Speicher abgelegt. In Fig. 2 ist ein Ausführungsbeispiel einer solchen Referenzsequenz in Form einer Tabelle dargestellt. Deutlich ist erkennbar, dass die Referenzsequenz eine Abfolge von sechs Sollwertkombinationen aufweist, die jeweils eine der Anzahl der Magnetfeldsensoren H1, H2, H3 entsprechende Anzahl von Sollwerten umfassen. In Fig. 2 ist jeder Sollwertkombination jeweils ein fortlaufender Index zugeordnet. Dabei ist der Index ,0' die Sollwertkombination zugeordnet, die der an der Referenzposition auftretenden Messwertkombination entspricht.

Zum Positionieren des Sekundärteils relativ zu dem Primärteil wird die Wicklung des EC-Motors in Abhängigkeit von den jeweils ermittelten Messwertkombinationen in an sich bekannter Weise bestromt. Dabei erzeugt die Wicklung ein magnetisches Wanderfeld, das derart mit den Magnetsegmenten zusammenwirkt, dass sich das Sekundärteil relativ zu dem Primärteil bewegt.

Die Messsignale der Magnetfeldsensoren H1, H2, H3 werden auch zur Bestimmung der Absolutposition des Sekundärteils relativ zu dem Primärteil genutzt. Diese wird in einem nicht flüchtigen Positionsspeicher abgelegt, beispielsweise einem EEPROM. Wie in Fig. 3 erkennbar ist, fährt der EC-Motor zunächst eine Referenzposition an, deren absolute Position bekannt ist. Bei dem in Fig. 2 gezeigten Ausführungsbeispiel weist diese den Wert ,0000' auf. Die Referenzposition kann beispielsweise durch einen Anschlag definiert sein, gegen den eines der beiden mit Hilfe des EC-Motors relativ zueinander verstellbaren Kupplungsteile in Offenstellung der Kupplung positionierbar ist. Die Referenzfahrt kann beispielsweise während und/oder nach dem Starten des Verbrennungsmotors durchgeführt werden. Sobald die Referenzposition erreicht ist, was beispielsweise mit Hilfe eines entsprechenden Sensors detektiert wird, wird der Positionsspeicher auf den Referenzpositionswert gesetzt. Danach wird bei jedem Auftreten eines Wechsels in der Messwertkombination der in dem Positionsspeicher abgelegte Absolutpositionswert nachgeführt, indem der Absolutpositionswert bei einer Vorwärtsbewegung des Sekundärteils um 1 erhöht und/oder bei einer Rückwärtsbewegung um 1 vermindert wird. Aus dem so ermittelten neuen Absolutpositionswert p und der Anzahl n der gespeicherten Sollwertkombinationen wird mit Hilfe der nachfolgend angegebenen Modulo-Operation ein Index i bestimmt:

$$i = p \bmod n$$

Mit Hilfe dieses Index wird die dem Absolutpositionswert zugeordnete Sollwertkombination ermittelt, indem die entsprechende Sollwertkombination aus einer dem Index zugeordneten Speicherstelle des Referenzsequenz-Speichers ausgelesen wird. In Fig. 3 ist für die einzelnen Absolutpositionswerte jeweils der Index in der zweiten und die entsprechende Sollwertkombination in der dritten Tabellenspalte eingetragen. Die auf diese Weise ermittelte Sollwertkombination wird mit der dem Absolutpositionswert zugeordneten Messwertkombination verglichen. Beim Auftreten einer Abweichung zwischen der Sollwertkombination und der Messwertkombination wird ein Fehlerzustand erkannt und in einem Fehlerzustandsspeicher abgelegt. Die entsprechenden Fehlerzustandswerte sind in Fig. 3 in der letzten Tabellenspalte eingetragen. Dabei bedeutet der Wert ,1', dass ein Fehler festgestellt wurde. Der Mikrocomputer ermittelt außerdem aus den Absolutpositionswerten die Relativgeschwindigkeit zwischen Sekundär- und Primärteil und legt diese in einem nichtflüchtigen Datenspeicher ab.

In Fig. 3 ist erkennbar, dass nach dem Erreichen der Absolutposition 2837 der Mikrocomputer zurückgesetzt wird. Dabei befindet sich der EC-Motor unmittelbar vor dem Reset im Stillstand. Ein solcher Reset kann beispielsweise erforderlich werden, wenn die Betriebsspannung des Mikrocomputers aufgrund einer in der Praxis nicht ganz auszuschließenden Störung in der Stromversorgung des Kraftfahrzeugs einen vorgeschriebenen Mindestspannungswert derart unterschreitet, dass ein in dem Mikrocomputer ablaufendes Betriebsprogramm gestört werden kann. Damit es bei einer solchen Störung nicht zu einem unkontrollierten Verstellen der Kupplung des Kraftfahrzeugs kommt, wird der Mikrocomputer durch einen Neustart in einen definierten Betriebszustand überführt. Wenn während des Resets und/oder des anschließenden Neustarts das Sekundärteil seine Lage relativ zu dem Primärteil verändert, wird der Absolutpositionswert jedoch nicht nachgeführt. Um die Gefahr, das es dadurch nach dem Neustart des Mikrocomputers zu einem Fehler bei der Betätigung der Kupplung kommt, zu reduzieren, wird nach oder während des Neustarts die Messwertkombination neu ermittelt und mit der dem Absolutpositionswert zugeordneten Sollwertkombination verglichen. Stimmt die Messwertkombination mit dem Absolutpositionswert überein und ist die nach dem Reset gemessene Relativgeschwindigkeit weiterhin gleich Null, wird angenommen, dass während und nach dem Reset keine Relativbewegung zwischen dem Sekundärteil und dem Primärteil stattgefunden hat. Die Absolutposition wird dann nachfolgend, ausgehend von dem in dem Positionsspeicher befindlichen Absolutpositionswert 2837 bei jedem Auftreten eines Wechsels in der Messwertkombination nachgeführt.

In Fig. 3 ist erkennbar, dass bei der Absolutposition 6004 ein zweiter Reset des Mikrocomputers durchgeführt wird. Auch hier befindet sich der EC-Motor unmittelbar vor dem Reset im Stillstand. Während des Resets wird das Sekundärteil jedoch durch eine Fremdkraft relativ zu dem Primärteil bewegt. Deutlich ist erkennbar, dass nach dem Reset zwar weiterhin der Absolutpositionswert 6004 in dem Positionsspeicher abgelegt ist, dass jedoch die Messwertkombination nicht mehr mit der unmittelbar vor dem Reset aufgetretenen Messwertkombination übereinstimmt. Bei dem nach dem Neustart durchgeführten Vergleich der dann vorhandenen Messwertkombination mit der dem Absolutpositionswert zugeordneten Sollwertkombination wird eine Abweichung und somit ein Fehlerzustand festgestellt. Der Fehlerzustand wird in dem Fehlerzustandsspeicher abgelegt. Dann wird eine zweite Referenzfahrt durchgeführt. Sobald die Referenzposition erreicht ist, wird der Referenzpositionswert als neuer Absolutpositionswert in den Positionsspeicher geschrieben. Danach wird der Absolutpositionswert wiederum beim jedem Auftreten eines Wechsels in der Messwertkombination nachgeführt.

Die Relativgeschwindigkeit zwischen Sekundärteil und Primärteil wird mit Hilfe der Messsignale der Magnetfeldsensoren H1, H2, H3 bestimmt. Dabei erfolgt die Bestimmung der Relativgeschwindigkeit nach unterschiedlichen Messmethoden. Die jeweils zur Anwendung kommende Messmethode wird in Abhängigkeit von einem bei einer früheren Geschwindigkeitsmessung ermittelten Geschwindigkeitswert derart ausgewählt, dass bei einer geringen Relativgeschwindigkeit eine geringe Verzögerungzeit bei der Bestimmung der Geschwindigkeitswerte auftritt, und dass bei einer hohen Geschwindigkeit die Geschwindigkeitswerte ein niedriges Rauschen bzw. eine geringe Schwankungsbreite aufweisen. Wenn noch kein entsprechender Geschwindigkeitswert ermittelt wurde, wird der erste Geschwindigkeitswert mit einer vorgegebenen Messmethode bestimmt.

Bei einer ersten Messmethode wird bei einer festen Abtastrate die Anzahl der Inkremente über die Abtastdauer gezählt und die Anzahl dann durch die Abtastdauer dividiert. Bei dieser Messmethode tritt eine maximale Ungenauigkeit von einem Inkrement pro Abtastdauer auf. Bei einer Relativgeschwindigkeit von 10 Inkrementen pro Abtastdauer liegt die Ungenauigkeit bei 10%. Bei nur einem Inkrement pro Abtastdauer beträgt die Ungenauigkeit jedoch bereits 100%. Die Auswertung kann schon ab dem ersten Inkrement ein Signal liefern. Die ersten Messmethode wird bevorzugt bei niedrigen Relativgeschwindigkeiten angewendet.

Bei einer zweiten Messmethode zur Bestimmung der Relativgeschwindigkeit wird jeweils der Zeitabstand zwischen zwei Zeitpunkten, an denen ein Wechsel der Messwertkombinationen in der Messsequenz auftritt, ermittelt. Mit Hilfe der diesen Zeitpunkten zugeordneten Absolutpositionswerte wird die Wegstrecke bestimmt, über die das Sekundärteil zwischen den Zeitpunkten relativ zu dem Primärteil bewegt wurde. Aus dem Zeitabstand und der Wegstrecke wird dann ein Geschwindigkeitswert für die Relativgeschwindigkeit zwischen Primärteil und Sekundärteil bestimmt. Die Auswahl der Zeitpunkte erfolgt jeweils in Abhängigkeit von dem Geschwindigkeitswert, der bei der vorherigen Geschwindigkeitsmessung ermittelt wurde.

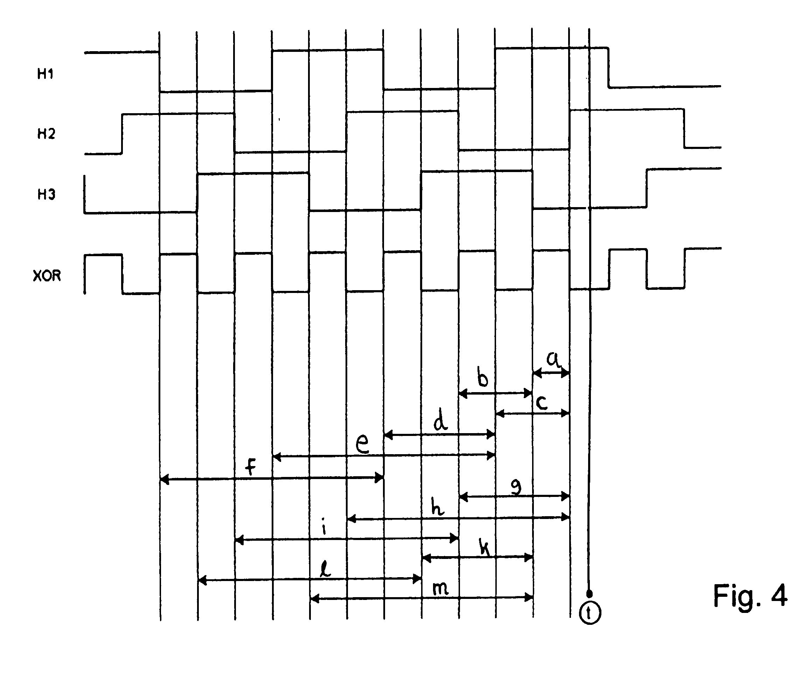

Bei dem in Fig. 4 gezeigten Ausführungsbeispiel sind die Zeitpunkte, zwischen denen der Zeitabstand bestimmt wird, innerhalb von ansteigenden und/oder abfallenden Flanken der als Rechtecksignale ausgebildeten Magnetfeldsensor-Messsignale angeordnet. Die Zeit, bei der die Relativgeschwindigkeit gemessen werden soll, ist in Fig. 4 durch die mit (t) bezeichnete Linie markiert. Bei drei Magnetfeldsensor-Messsignalen, die jeweils ansteigende und abfallende Flanken aufweisen, ergebe sich folgende unterschiedliche Möglichkeiten für die Drehzahlberechnung:

| Fall | Quellen für die Bestimmung der Relativgeschwindigkeit |
|---|---|
| a | die letzten beiden Flanken des XOR-Signals |
| b | die letzten beiden ansteigenden Flanken des XOR-Signals |
| c | die letzten beiden abfallenden Flanken des XOR-Signals |
| d | die letzten beiden Flanken der Messsignals des Magnetfeldsensors H1 |
| e | die letzten beiden ansteigenden Flanken des Messsignals des Magnetfeldsensors H1 |
| f | die letzten beiden abfallenden Flanken des Messsignals des Magnetfeldsensors H1 |
| g | die letzten beiden Flanken der Messsignals des Magnetfeldsensors H2 |
| h | die letzten beiden ansteigenden Flanken des Messsignals des Magnetfeldsensors H2 |
| i | die letzten beiden abfallenden Flanken des Messsignals des Magnetfeldsensors H2 |
| j | die letzten beiden Flanken der Messsignals des Magnetfeldsensors H3 |
| k | die letzten beiden ansteigenden Flanken des Messsignals des Magnetfeldsensors H3 |
| l | die letzten beiden abfallenden Flanken des Messsignals des Magnetfeldsensors H3 |

Bei einer Zeitmessung über nur ein einziges Inkrement oder über wenige Inkremente, wie z.B. in den Fällen a) bis c) der obigen Tabelle, tritt gegenüber einer Zeitmessung über eine größere Anzahl Inkremente eine geringeren Verzögerungzeit bei der Geschwindigkeitsmessung auf. Bei einer Zeitmessung über nur ein einziges Inkrement oder über wenige Inkremente wirken sich jedoch Toleranzen in der Positionierung und/oder den Abmessungen der Magnetsegmente stärker auf den ermittelten Geschwindigkeitsmesswert aus als bei einer Zeitmessung über eine größere Anzahl Inkremente.

Aus der nachstehenden Tabelle ist ersichtlich, wie viele Inkremente benötigt werden, bevor der erste Geschwindigkeitswert berechnet werden kann:

| Fall | Messmethode | Anzahl der benötigten Inkremente |
|---|---|---|
| a | Die letzten beiden Flanken, XOR | 2 |

(fortgesetzt)

| Fall | Messmethode | Anzahl der benötigten Inkremente |
|---|---|---|
| b, c | Die letzten beiden gleichen Flanken, XOR | 3 (günstigster Fall), 4 (ungünstigster Fall) Immer 3, falls beide Flanken ausgewertet werden |
| d, g, k | Die letzten beiden Flanken eines Sensors | 4 (günstigster Fall), 6 (ungünstigster Fall) |
| e, f, h, i, l, m | Die letzten beiden gleichen Flanken eines Sensors | 7 (günstigster Fall), 12 (ungünstigster Fall) |
| (d) | Die letzten beiden Flanken des letzten Sensors | 4 |
| (f) | Die letzten beiden gleichen Flanken des letzten Sensors | 7 (günstigster Fall), 8 (ungünstigster Fall) Immer 7, falls beide Flanken ausgewertet werden |

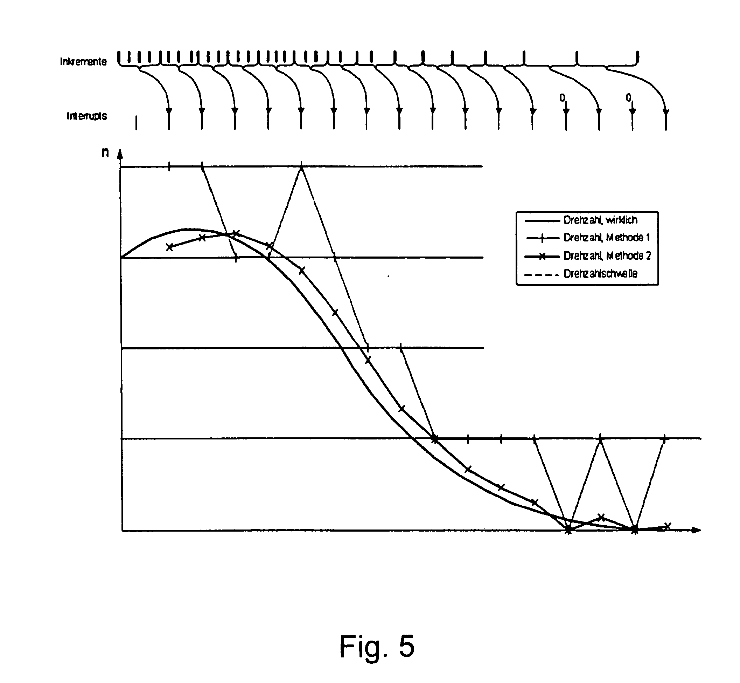

In Fig. 5 sind die nach den beiden Messmethoden ermittelten Relativgeschwindigkeitssignale und die tatsächliche Relativgeschwindigkeit graphisch dargestellt. Deutlich ist erkennbar, dass das nach der Messmethode 1 ermittelte Relativgeschwindigkeitssignal eine größere Rauigkeit aufweist als das nach der Messmethode 2 ermittelte Relativgeschwindigkeitssignal. Außerdem ist erkennbar, dass das nach der Messmethode 2 ermittelte Relativgeschwindigkeitssignal gegenüber der tatsächlichen Relativgeschwindigkeit eine Phasenverschiebung aufweist.

Bei der Messmethoden 1 und 2 gibt es jeweils eine untere Schwelle für die messbare Relativgeschwindigkeit. Diese liegt bei Messmethode 1 bei einem Inkrement pro Abtastdauer und bei der Messmethode 2 ist die Schwelle von dem gewählten Zeitabstand abhängig. Wenn die Relativgeschwindigkeit unterhalb dieser Schwelle liegt, ergibt nicht jede Auswertung einen Geschwindigkeitswert, der größer als null ist. Wenn die gemessene Relativgeschwindigkeit gleich null ist, bedeutet dies also nicht notwendigerweise, dass sich der EC-Motor nicht mehr bewegt.

Bei der ersten und zweiten Messmethode gibt es jeweils einen unteren Schwellewert für messbare Relativgeschwindigkeit. Dieser Schwellwert liegt bei der ersten Methode bei einem Inkrement pro Messperiode. Bei der zweiten Methode ist der Schwellwert von der gewählten Messlänge abhängig. Wenn die Relativgeschwindigkeit unterhalb der Schwelle liegt, ergibt nicht jede Auswertung ein Ergebnis. Manchmal wird für die Relativgeschwindigkeit der Wert 1 und manchmal der Wert 0 ermittelt. Der Relativgeschwindigkeitswert 0 bedeutet aber nicht notwendigerweise, dass sich das Sekundärteil nicht mehr relativ zu dem Primärteil bewegt.

Wenn sich das Sekundärteil des EC-Motors 2 mit konstanter Geschwindigkeit unterhalb des Schwellwerts bewegt und für die Relativgeschwindigkeit der Wert 0 ermittelt wird, wäre es am besten, den letzten Geschwindigkeitswert, der ungleich 0 war, beizubehalten. Für den Fall, dass der EC-Motor zum Stillstand kommt, wäre es jedoch besser, mit der gemessenen Relativgeschwindigkeit sofort auf 0 zu springen.

Um die erwähnten Messgenauigkeit bei geringen Relativgeschwindigkeiten zu verbessern, können die Relativgeschwindigkeitswerte gefiltert werden, beispielsweise indem der Mittelwert aus den beiden letzten ungefilterten Relativgeschwindigkeitswerten und/oder der Mittelwert aus dem letzten gefilterten Relativgeschwindigkeitswert und dem letzten ungefilterten Relativgeschwindigkeitswert ermittelt wird. Dabei wird das zuerst genannte Filterverfahren bevorzugt, weil das nach diesem Verfahren ermittelte Relativgeschwindigkeitssignal ein geringeres Räuschen aufweist als das mit dem zuletzt genannten Filterverfahren ermittelte Relativgeschwindigkeitssignal. Außerdem erreicht bei dem zuerst genannten Filterverfahren das gefilterte Relativgeschwindigkeitssignal schneller den Wert null, wenn der EC-Motor angehalten wird.

In der Praxis weisen die Magnetsegmente Lagetoleranzen sowie Toleranzen ihrer Abmessung und ihrer Magnetisierung auf. Auch die Magnetfeldsensoren H1, H2, H3 können Lagetoleranzen aufweisen. Die Toleranzen können dazu führen, dass die ermittelten Geschwindigkeitswerte von der tatsächlichen Relativgeschwindigkeit zwischen Sekundärteil und Primärteil abweichen. Dabei ist die Abweichung von der Messmethode abhängig, mit der die Geschwindigkeitswerte ermittelt werden.

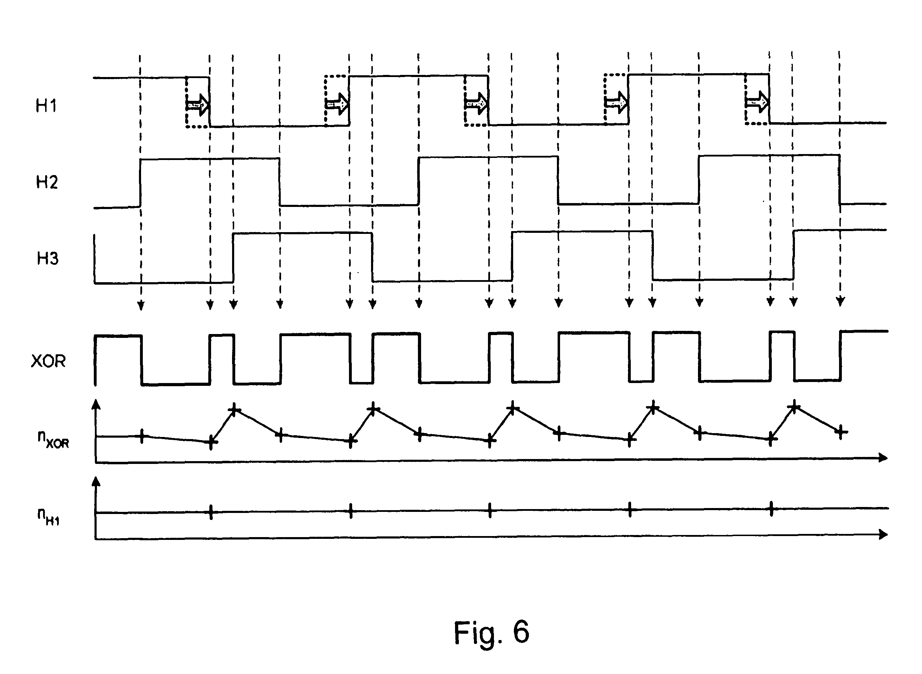

In Fig. 6 sind für einen EC-Motor 2, bei dem der Magnetfeldsensor H1 ungenau positioniert ist, die Messsignale der Magnetfeldsensoren H1, H2, H3 dargestellt. Deutlich ist erkennbar, dass aufgrund der ungenauen Positionierung des Magnetfeldsensors H1 dessen Messsignal gegenüber der Solllage nach rechts verschoben ist. In Fig. 6 ist dies durch Pfeile angedeutet. In Fig. 6 ist weiter erkennbar, dass die Messsignale der Magnetfeldsensoren H1, H2, H3 exclusiv-oder-verknüpft werden. Das entsprechende Exclusiv-Oder-Singnal ist mit XOR bezeichnet. Aufgrund der ungenauen Positionierung des Magnetfeldsensors H1 weisen einerseits die Pulse und andererseits aber auch die Pulspausen unterschiedliche Breiten auf. Wenn das Geschwindigkeitssignal dadurch ermittelt wird, dass die Zeitdauer zwischen dem Auftreten zweier aufeinander folgender Flanken des XOR-Signals bestimmt und durch die Wegstecke dividiert wird, die dem Sollabstand entspricht, um den die Magnetsegmente bei fehlerfreier Positionierung zueinander versetzt sein sollen, ergeben sich Schwankungen in dem Geschwindigkeitssignal. Das entsprechende Geschwindigkeitssignal ist in Fig. 6 mit $n_{XOR}$ bezeichnet. Diese Ungenauigkeit kann dadurch vermieden werden, dass das Geschwindigkeitssignal von nur einem Magnetfeldsensor berechnet wird. Das auf diese Weise ermittelte Geschwindigkeitssignal ist in Fig. 6 mit $n_{H1}$ bezeichnet.

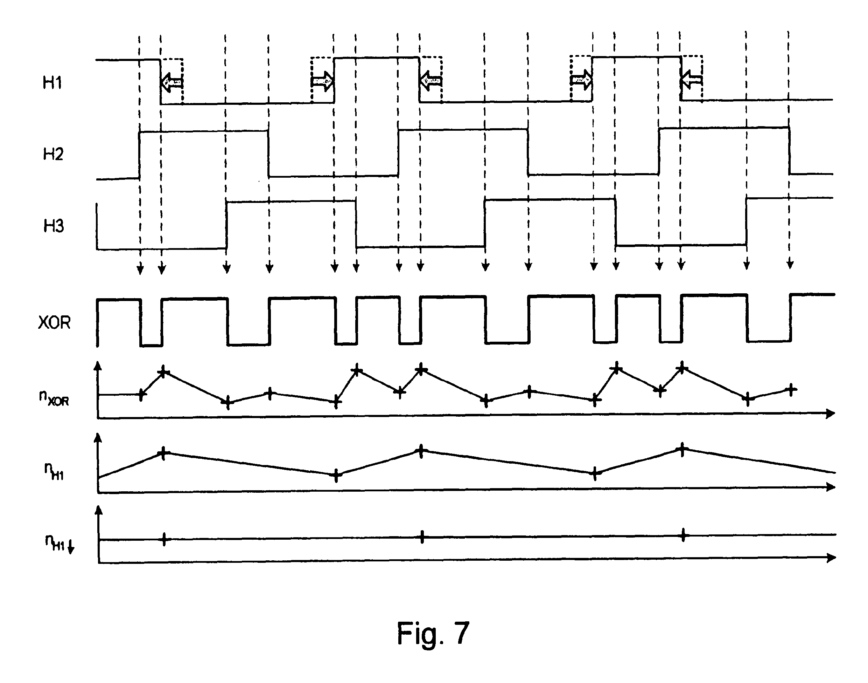

In Fig. 7 sind für einen EC-Motor 2, bei dem der Magnetfeldsensor H1 falsch kalibriert ist und/oder einen zu großen Abstand zu den Magnetsegmenten aufweist, die Messsignale der Magnetfeldsensoren H1, H2, H3 dargestellt. Deutlich ist erkennbar, dass die Pulse des Magnetfeldsensors H1 eine zu geringe und die Pulspausen eine zu große Breite aufweisen. Dadurch ergeben sich auch bei dem XOR-Signal Schwankungen in der Pulsbreite und der Dauer der Pulspausen. Die Geschwindigkeitssignale XOR und $n_{H1}$ schwanken deshalb entsprechend, wobei die Schwankungen bei dem Geschwindigkeitssignal XOR größer sind als bei dem Geschwindigkeitssignal $n_{H1}$. Diese Ungenauigkeiten können dadurch vermieden werden, dass das Geschwindigkeitssignal nur mit Hilfe in diese Richtung weisender Flanken desselben Magnetfeldsensors berechnet wird. Das auf diese Weise ermittelte Geschwindigkeitssignal ist in Fig. 7 mit $n_{H1\downarrow}$ bezeichnet.

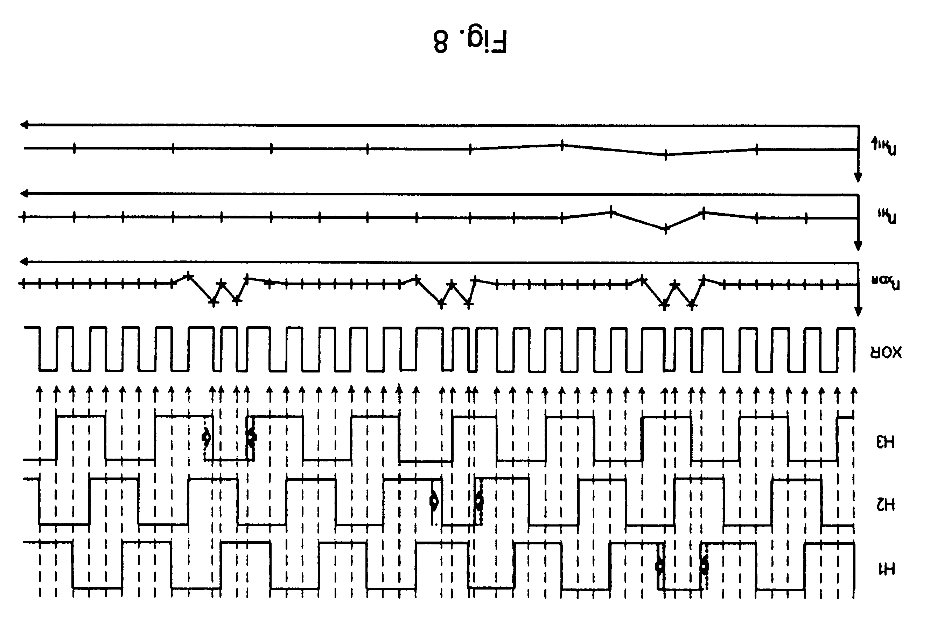

In Fig. 8 sind für einen EC-Motor 2, bei dem ein Magnetsegment zu schwach magnetisiert ist, die Messsignale der Magnetfeldsensoren H1, H2, H3 dargestellt. Deutlich ist erkennbar, dass in jedem der Messsignale bei jedem Vorbeilaufen des zu schwach magnetisierten Magnetsegments an dem entsprechenden Magnetfeldsensor ein zu schmaler Puls auftritt, der zu Fehlern in den Geschwindigkeitssignalen $n_{XOR}$, $n_{H1}$ und $n_{H1\downarrow}$. Dabei sind die Fehler des Geschwindigkeitssignals $n_{H1\downarrow}$.wesentlich kleiner als die des Geschwindigkeitssignals $n_{XOR}$.

Die Geschwindigkeitswerte werden von einer Steuereinrichtung in einem vorgegebenem Zeitraster zyklisch angefordert. Die Steuereinrichtung kann einen Mikrocomputer aufweisen, bei dem jeweils nach einer vorgegeben Zeitdauer ein Interrupt ausgelöst wird, um einen Geschwindigkeitswert zu ermitteln. In Abhängigkeit von der Anzahl der jeweils während der letzten Messperiode erfassten Magnetfeldsensor-Messsignalen, den Lage- und/oder Kalibrierungstoleranzen der Magnetfeldsensoren H1, H2, H3 und den einzelnen Toleranzen, welche die während der Messperiode detektierten Magnetsegmente hinsichtlich ihrer Positionierung, ihrer Abmessungen und ihrer Magnetisierung aufweisen, wird jeweils diejenige Messmethode ausgewählt, die bei der Ermittlung der Geschwindigkeitswerte den geringsten Fehler ergibt. Mit dieser Messmethode wird dann der Geschwindigkeitswert für die betreffende Messperiode ermittelt.

Bei Losfahren nach dem Start-Up oder nach längerem Stillstand des EC-Motors 2 ist es wichtig, die Verzögerung bei der Geschwindigkeitsmessung so klein wie möglich zu halten. Dies wird erreicht, indem ein Geschwindigkeitswert mit den ersten verfügbaren Pulsen berechnet wird. Wenn während der Abtastdauer weniger als drei Inkremente aufgetreten sind, werden die letzten beiden Flanken des XOR-Signals für die Berechnung des Geschwindigkeitswerts verwendet. Sind während der Abtastdauer zwischen 3 und 6 Inkremente gezählt worden, werden die letzten drei (=Anzahl der Magnetfeldsensoren) Inkremente benutzt, um den Geschwindigkeitswert zu berechnen. Dabei werden beide Flanken desselben Sensors ausgewertet. Wenn während der Abtastdauer mehr als sechs Inkremente auftreten, werden die letzen n x 6 Inkremente für die Bestimmung des Geschwindigkeitswerts verwendet, wobei n ein ganzzahliger Wert ist. In diesem Fall wird immer die gleiche Flanke des letzten Sensors verwendet.

**Bezugszeichenliste**

| | |
|---|---|
| 1 | elektrischer Antrieb |
| 2 | EC-Motor |
| 3 | Endstufe |
| 4 | Mikrocomputer |
| H1 | erster Magnetfeldsensor |
| H2 | zweiter Magnetfeldsensor |
| H3 | dritter Magnetfeldsensor |

**Patentansprüche**

1.  Verfahren zum Betreiben eines EC-Motors (2), der ein Primärteil mit einer Wicklung und ein Sekundärteil mit abwechselnd in zueinander entgegengesetzte Richtungen magnetisierten Magnetsegmenten aufweist, wobei mit Hilfe von an dem Primärteil angeordneten, mit den Magnetsegmenten zusammenwirkenden Magnetfeldsensoren (H1, H2, H3) eine Messsequenz erfasst wird, die mehrere, von der Relativposition zwischen Sekundärteil und Primärteil abhängige Messwertkombinationen aufweist, die jeweils eine der Anzahl der Magnetfeldsensoren (H1, H2, H3) entsprechende Anzahl von Messwerten umfassen, und wobei die Wicklung in Abhängigkeit von den Messwertkombinationen derart bestromt wird, dass sich das Sekundärteil relativ zu dem Primärteil bewegt, wobei die Absolutposition des Sekundärteils relativ zu dem Primärteil bestimmt wird, indem das Sekundärteil an einer Referenzposition positioniert wird, und wobei ein Absolutpositionswert, ausgehend von einem Referenzpositionswert bei jedem Auftreten eines Wechsels der Messwertkombination nachgeführt wird, wobei für eine in eine vorgegebene Richtung orientierte Relativbewegung zwischen dem Sekundärteil und dem Primärteil eine aus mehreren, nacheinander zyklisch zu durchlaufenden Sollwertkombinationen bestehende, jeweils eine der Anzahl der Magnetfeldsensoren (H1, H2, H3) entsprechende Anzahl von Sollwerten aufweisende Referenzsequenz ermittelt und gespeichert wird, dass anhand der Referenzsequenz, der an der Referenzposition aufgetretenen Messwertkombination und der Anzahl der seit dem Erreichen der Referenzposition aufgetretenen Wechsel in der Messwertkombination die dem Absolutpositionswert zugeordnete Sollwertkombination bestimmt wird, dass diese Sollwertkombination mit der für den betreffenden Absolutpositionswert ermittelten Messwertkombination verglichen wird, und dass beim Auftreten einer Abweichung zwischen der Sollwertkombination und der Messwertkombination ein Fehlerzustand erkannt wird, **dadurch gekennzeichnet, dass** nach dem Erkennen des Fehlerzustands mindestens ein erster Magnetfeldsensor (H1, H2, H3) ermittelt wird, dessen Messwerte von den entsprechenden Sollwerten der Sollwertkombination abweichen, und dass für den Fall, dass die Messwerte wenigstens eines zweiten Magnetfeldsensors (H1, H2, H3) mit den ihm zugeordneten Sollwerten der Sollwertkombination übereinstimmen, der Absolutpositionswert beim Auftreten eines Wechsels in den Messwerten des wenigstens einen zweiten Magnetfeldsensors (H1, H2, H3) unter Berücksichtigung des Ausfalls der Messwerte des mindestens einen ersten Magnetfeldsensors (H1, H2, H3) nachgeführt wird.

2. Verfahren zum Betreiben eines EC-Motors (2), der ein Primärteil mit einer Wicklung und ein Sekundärteil mit abwechselnd in zueinander entgegengesetzte Richtungen magnetisierten Magnetsegmenten aufweist, wobei mit Hilfe von an dem Primärteil angeordneten, mit den Magnetsegmenten zusammenwirkenden Magnetfeldsensoren (H1, H2, H3) eine Messsequenz erfasst wird, die mehrere, von der Relativposition zwischen Sekundärteil und Primärteil abhängige Messwertkombinationen aufweist, die jeweils eine der Anzahl der Magnetfeldsensoren (H1, H2, H3) entsprechende Anzahl von Messwerten umfassen, und wobei die Wicklung in Abhängigkeit von den Messwertkombinationen derart bestromt wird, dass sich das Sekundärteil relativ zu dem Primärteil bewegt, wobei die Absolutposition des Sekundärteils relativ zu dem Primärteil bestimmt wird, indem das Sekundärteil an einer Referenzposition positioniert wird, und wobei ein Absolutpositionswert, ausgehend von einem Referenzpositionswert bei jedem Auftreten eines Wechsels der Messwertkombination nachgeführt wird, wobei für eine in eine vorgegebene Richtung orientierte Relativbewegung zwischen dem Sekundärteil und dem Primärteil eine aus mehreren, nacheinander zyklisch zu durchlaufenden Sollwertkombinationen bestehende, jeweils eine der Anzahl der Magnetfeldsensoren (H 1, H2, H3) entsprechende Anzahl von Sollwerten aufweisende Referenzsequenz ermittelt und gespeichert wird, dass anhand der Referenzsequenz, der an der Referenzposition aufgetretenen Messwertkombination und der Anzahl der seit dem Erreichen der Referenzposition aufgetretenen Wechsel in der Messwertkombination die dem Absolutpositionswert zugeordnete Sollwertkombination bestimmt wird, dass diese Sollwertkombination mit der für den betreffenden Absolutpositionswert ermittelten Messwertkombination verglichen wird, und dass beim Auftreten einer Abweichung zwischen der Sollwertkombination und der Messwertkombination ein Fehlerzustand erkannt wird, **dadurch gekennzeichnet, dass** nach dem Erkennen des Fehlerzustands die Anzahl der Magnetfeldsensoren (H1, H2, H3) ermittelt wird, deren Messwert(e) von den entsprechenden Sollwerten der Sollwertkombination abweichen, und dass für den Fall, dass diese Anzahl einen vorgegeben Wert überschreitet, die Wicklung des EC-Motors (2) zur Erzeugung eines magnetischen Wanderfelds mit einem vorgegebenen, von den Messwertkombinationen unabhängigen Ansteuerungsmuster angesteuert wird.

3. Verfahren nach Anspruch 1 oder 2, **dadurch gekennzeichnet, dass** der Absolutpositionswert bei jedem Wechsel in der Messwertkombination bei einer Vorwärtsbewegung des Sekundärteils um 1 erhöht und/oder bei einer Rückwärtsbewegung um 1 vermindert wird, dass aus dem Absolutpositionswert und der Anzahl der gespeicherten Sollwertkombinationen mit Hilfe einer Modulo-Operation ein Index bestimmt wird, und dass mit Hilfe des Index und der an der Referenzposition aufgetretenen Messwertkombination die dem Absolutpositionswert zugeordnete Sollwertkombination ermittelt wird.

4. Verfahren nach Anspruch 1 oder 2, **dadurch gekennzeichnet, dass** nach dem Erkennen des Fehlerzustands die Referenzposition erneut angefahren und der Absolutpositionswert an der Referenzposition auf den Referenzpositionswert gesetzt wird.

5. Verfahren nach Anspruch 1 oder 2, **dadurch gekennzeichnet, dass** mit Hilfe der Messwerte mindestens eines Magnetfeldsensors (H1, H2, H3) und des zeitlichen Abstands, den diese Messwerte zueinander aufweisen, Geschwindigkeitswerte für die Relativgeschwindigkeit zwischen Primärteil und Sekundärteil bestimmt werden, dass die einzelnen Geschwindigkeitswerte nach unterschiedlichen Messmethoden ermittelt werden, und dass die jeweils anzuwendende Messmethode in Abhängigkeit von einem bei einer früheren Geschwindigkeitsmessung ermittelten Geschwindigkeitswert ausgewählt wird.

6. Verfahren nach Anspruch 5, **dadurch gekennzeichnet, dass** bei mindestens einer Messmethode die Geschwindigkeitswerte mit einer festen Abtastrate aus den Messwerten des mindestens einen Magnetfeldsensors (H1, H2, H3) ermittelt werden, indem die Inkremente über die Abtastdauer gezählt und die Anzahl dann durch die Abtastdauer dividiert.

7. Verfahren nach Anspruch 5, **dadurch gekennzeichnet, dass** bei mindestens einer Messmethode der Zeitabstand zwischen mindestens zwei Zeitpunkten, an denen ein Wechsel der Messwertkombinationen in der Messsequenz auftritt, ermittelt wird, dass mit Hilfe der diesen Zeitpunkten zugeordneten Absolutpositionswerte die Wegstrecke bestimmt wird, über die das Sekundärteil zwischen den Zeitpunkten relativ zu dem Primärteil bewegt wurde, dass aus dem Zeitabstand und der Wegstrecke ein Geschwindigkeitswert für die Relativgeschwindigkeit zwischen Primärteil und Sekundärteil bestimmt wird, und dass die Auswahl der Zeitpunkte vorzugsweise in Abhängigkeit von einem Geschwindigkeitswert erfolgt, der bei einer früheren Geschwindigkeitsmessung ermittelt wurde.

8. Verfahren nach Anspruch 7, **dadurch gekennzeichnet, dass** die Auswahl der Zeitpunkte, die der Bestimmung der Geschwindigkeitswerte zu Grunde gelegt werden, in Abhängigkeit von der Größe der Lagetoleranzen der Magnetsegmente, der Toleranzen in den Abmessungen und/oder in der Magnetisierung der Magnetsegmente ermittelt wird.

9. Verfahren nach Anspruch 7, **dadurch gekennzeichnet, dass** bei einer Geschwindigkeit, die einen vorgegebenen Grenzwert unterschreitet, der Zeitabstand zwischen unmittelbar aufeinander folgenden Wechseln von Messwertkombinationen und bei einer Geschwindigkeit, die dem Grenzwert entspricht oder größer ist als dieser, der Zeitabstand zwischen Wechseln von Messwertkombinationen bestimmt, die in der Messsequenz voneinander beabstandet sind.

10. Verfahren nach Anspruch 7, **dadurch gekennzeichnet, dass** die Zeitpunkte derart gewählt werden, dass sie innerhalb unmittelbar aufeinander folgender ansteigender, abfallender und/oder in zueinander entgegengesetzte Richtungen orientierten Flanken des Messsignals mindestens eines Magnetfeldsensors (H1, H2, H3) liegen.

## Claims

1. Method for operating an EC motor (2), which has a primary part with a winding and a secondary part with magnet segments which are magnetized alternately in mutually opposite directions, a measurement sequence being detected with the aid of magnetic field sensors (H1, H2, H3), which are arranged on the primary part and interact with the magnet segments, which measurement sequence has a plurality of measurement value combinations which are dependent on the relative position between the secondary part and the primary part and which each comprise a number of measurement values which corresponds to the number of magnetic field sensors (H1, H2, H3), and the winding being energized as a function of the measurement value combinations in such a way that the secondary part moves relative to the primary part, the absolute position of the secondary part relative to the primary part being determined by virtue of the secondary part being positioned at a reference position, and an absolute position value, starting from a reference position value, being tracked on each occurrence of a change in the measurement value combination, wherein, for a relative movement, which is oriented in a predetermined direction, between the secondary part and the primary part, a reference sequence which comprises a plurality of setpoint value combinations to be run through successively and cyclically and has in each case a number of setpoint values corresponding to the number of magnetic field sensors (H1, H2, H3), is determined and stored, wherein, using the reference sequence, the measurement value combination occurring at the reference position and the number of changes in the measurement value combination occurring since the reference position was reached, the setpoint value combination associated with the absolute position value is determined, wherein this setpoint value combination is compared with the measurement value combination determined for the absolute position value in question, and wherein, in the event of the occurrence of a discrepancy between the setpoint value combination and the measurement value combination, a fault state is identified, **characterized in that**, once the fault state has been identified, at least one first magnetic field sensor (H1, H2, H3) is determined whose measurement values deviate from the corresponding setpoint values of the setpoint value combination, and **in that**, for the case in which the measurement values of at least one second magnetic field sensor (H1, H2, H3) correspond to the setpoint values associated therewith of the setpoint value combination, the absolute position value is tracked in the event of the occurrence of a change in the measurement values of the at least one second magnetic field sensor (H1, H2, H3) taking into consideration the failure of the measurement values of the at least one first magnetic field sensor (H1, H2, H3).

**2.** Method for operating an EC motor (2), which has a primary part with a winding and a secondary part with magnet segments which are magnetized alternately in mutually opposite directions, a measurement sequence being detected with the aid of magnetic field sensors (H1, H2, H3), which are arranged on the primary part and interact with the magnet segments, which measurement sequence has a plurality of measurement value combinations which are dependent on the relative position between the secondary part and the primary part and which each comprise a number of measurement values which corresponds to the number of magnetic field sensors (H1, H2, H3), and the winding being energized as a function of the measurement value combinations in such a way that the secondary part moves relative to the primary part, the absolute position of the secondary part relative to the primary part being determined by virtue of the secondary part being positioned at a reference position, and an absolute position value, starting from a reference position value, being tracked on each occurrence of a change in the measurement value combination, wherein, for a relative movement, which is oriented in a predetermined direction, between the secondary part and the primary part, a reference sequence which comprises a plurality of setpoint value combinations to be run through successively and cyclically and has in each case a number of setpoint values corresponding to the number of magnetic field sensors (H1, H2, H3), is determined and stored, wherein, using the reference sequence, the measurement value combination occurring at the reference position and the number of changes in the measurement value combination occurring since the reference position was reached, the setpoint value combination associated with the absolute position value is determined, wherein this setpoint value combination is compared with the measurement value combination determined for the absolute position value in question, and wherein, in the event of the occurrence of a discrepancy between the setpoint value combination and the measurement value combination, a fault state is identified **characterized in that**, once the fault state has been identified, the number of magnetic field sensors (H1, H2, H3) is determined whose measurement value(s) deviate(s) from the corresponding setpoint values of the setpoint value combination, and **in that**, for the case in which this number exceeds a predetermined value, the winding of the EC motor (2) is driven so as to induce a travelling magnetic field with a predetermined drive pattern which is independent of the measurement value combinations.

**3.** Method according to Claim 1 or 2, **characterized in that**, on each change in the measurement value combination, the absolute position value is increased by one in the event of a forward movement of the secondary part and/or is reduced by one in the event of a reverse movement, **in that** an index is determined from the absolute position value and the number of stored setpoint value combinations with the aid of a modulo operation, and **in that** the setpoint value combination associated with the absolute position value is determined with the aid of the index and the measurement value combination occurring at the reference position.

**4.** Method according to Claim 1 or 2, **characterized in that**, once the fault state has been identified, the reference position is approached again and the absolute position value at the reference position is set to the reference position value.

**5.** Method according to Claim 1 or 2, **characterized in that** speed values for the relative speed between the primary part and the secondary part are determined with the aid of the measurement values of at least one magnetic field sensor (H1, H2, H3) and the time interval between these measurement values, **in that** the individual speed values are determined in accordance with different measurement methods, and **in that** the measurement method to be used in each case is selected depending on a speed value determined for an earlier speed measurement.

**6.** Method according to Claim 5, **characterized in that**, in the case of at least one measurement method, the speed values are determined with a fixed sampling rate from the measurement values of the at least one magnetic field sensor (H1, H2, H3) by virtue of the increments over the sampling period being counted and the number then being divided by the sampling period.

**7.** Method according to Claim 5, **characterized in that**, in the case of at least one measurement method, the time interval between at least two times at which a change in the measurement value combinations in the measurement sequence occurs is determined, **in that** the distance over which the secondary part has moved relative to the primary part between the times is determined with the aid of the absolute position values associated with these times, **in that** a speed value for the relative speed between the primary part and the secondary part is determined from the time interval and the distance, and **in that** the selection of the times preferably takes place as a function of a speed value, which has been determined in an earlier speed measurement.

**8.** Method according to Claim 7, **characterized in that** the selection of the times on which the determination of the speed values is based is determined as a function of the magnitude of the positional tolerances of the magnet segments, the tolerances in terms of the dimensions and/or in terms of the magnetization of the magnet segments.

9. Method according to Claim 7, **characterized in that**, in the case of a speed which falls below a predetermined limit value, the time interval between immediately successive changes in measurement value combinations is determined and, in the case of a speed which corresponds to the limit value or is greater than said limit value, the time interval between changes in measurement value combinations is determined, said measurement value combinations being spaced apart from one another in the measurement sequence.

10. Method according to Claim 7, **characterized in that** the times are selected such that they are within edges of the measurement signal, which are directly successive and are rising, falling and/or oriented in mutually opposite directions, of at least one magnetic field sensor (H1, H2, H3).

**Revendications**

1. Procédé pour faire fonctionner un moteur électrique (2), lequel présente une partie primaire avec un enroulement et une partie secondaire avec des segments aimantés magnétisés en alternance dans des directions opposées l'une à l'autre, une séquence de mesure étant acquise à l'aide de détecteurs de champ magnétique (H1, H2, H3) disposés sur la partie primaire qui interagissent avec les segments aimantés, laquelle présente plusieurs combinaisons de valeurs mesurées qui dépendent de la position relative entre la partie secondaire et la partie primaire, lesquelles comprennent respectivement un nombre de valeurs mesurées correspondant au nombre de détecteurs de champ magnétique (H1, H2, H3), et l'enroulement étant alimenté électriquement en fonction des combinaisons de valeurs mesurées de telle sorte que la partie secondaire se déplace par rapport à la partie primaire, la position absolue de la partie secondaire par rapport à la partie primaire étant déterminée en positionnant la partie secondaire sur une position de référence, et une valeur de position absolue étant restituée en partant d'une valeur de position de référence à chaque fois que se produit un changement de la combinaison de valeurs mesurées, une séquence de référence composée de plusieurs combinaisons de valeurs de consigne à traverser cycliquement l'une après l'autre, qui présentent chacune un nombre de valeurs de consigne correspondant au nombre de détecteurs de champ magnétique (H1, H2, H3), étant déterminée et enregistrée pour un mouvement relatif orienté dans une direction prédéfinie entre la partie secondaire et la partie primaire, que la combinaison de valeurs de consigne associée à la valeur de la position absolue est déterminée au moyen de la séquence de référence, de la combinaison de valeurs mesurées qui se produit à la position de référence et du nombre de changements intervenus dans la combinaison de valeurs mesurées depuis que la position de référence a été atteinte, que cette combinaison de valeurs de consigne est comparée avec la combinaison de valeurs mesurées déterminée pour la valeur de la position absolue concernée et qu'une situation de défaut est constatée en présence d'un écart entre la combinaison de valeurs de consigne et la combinaison de valeurs mesurées, **caractérisé en ce qu'**après avoir constaté la situation de défaut, il est déterminé au moins un premier détecteur de champ magnétique (H1, H2, H3) dont les valeurs mesurées sont différentes des valeurs de consigne correspondantes dans la combinaison de valeurs de consigne, et que dans le cas où les valeurs mesurées d'au moins un deuxième détecteur de champ magnétique (H1, H2, H3) coïncident avec les valeurs de consigne qui lui sont associées de la combinaison de valeurs de consigne, la valeur de la position absolue, lorsqu'il se produit un changement dans les valeurs mesurées de l'au moins un deuxième détecteur de champ magnétique (H1, H2, H3), est restituée en tenant compte de la défaillance des valeurs mesurées de l'au moins un premier détecteur de champ magnétique (H1, H2, H3).

2. Procédé pour faire fonctionner un moteur électrique (2), lequel présente une partie primaire avec un enroulement et une partie secondaire avec des segments aimantés magnétisés en alternance dans des directions opposées l'une à l'autre, une séquence de mesure étant acquise à l'aide de détecteurs de champ magnétique (H1, H2, H3) disposés sur la partie primaire qui interagissent avec les segments aimantés, laquelle présente plusieurs combinaisons de valeurs mesurées qui dépendent de la position relative entre la partie secondaire et la partie primaire, lesquelles comprennent respectivement un nombre de valeurs mesurées correspondant au nombre de détecteurs de champ magnétique (H1, H2, H3), et l'enroulement étant alimenté électriquement en fonction des combinaisons de valeurs mesurées de telle sorte que la partie secondaire se déplace par rapport à la partie primaire, la position absolue de la partie secondaire par rapport à la partie primaire étant déterminée en positionnant la partie secondaire sur une position de référence, et une valeur de position absolue étant restituée en partant d'une valeur de position de référence à chaque fois que se produit un changement de la combinaison de valeurs mesurées, une séquence de référence composée de plusieurs combinaisons de valeurs de consigne à traverser cycliquement l'une après l'autre, qui présentent chacune un nombre de valeurs de consigne correspondant au nombre de détecteurs de champ magnétique (H1, H2, H3), étant déterminée et enregistrée pour un mouvement relatif orienté dans une direction prédéfinie entre la partie secondaire et la partie primaire, que la combinaison de valeurs de consigne associée à la valeur de la position absolue est déterminée au moyen de la séquence de référence, de la combinaison de valeurs mesurées qui se produit à la position de référence et du nombre de changements intervenus dans la combinaison de valeurs mesurées depuis que la position de référence a été atteinte, que cette combinaison de valeurs de consigne est comparée avec la combinaison de valeurs mesurées déterminée pour la valeur de la position absolue concernée et qu'une situation de défaut est constatée en présence d'un écart entre la combinaison de valeurs de consigne et la combinaison de valeurs mesurées, **caractérisé en ce qu'**après avoir constaté la situation de défaut, il est déterminé le nombre de détecteurs de champ magnétique (H1, H2, H3) dont la ou les valeurs mesurées sont différentes des valeurs de consigne correspondantes dans la combinaison de valeurs de consigne, et que dans le cas où ce nombre dépasse une valeur prédéfinie, l'enroulement du moteur électrique (2) est excité avec un modèle d'excitation prédéfini indépendant des combinaisons de valeurs mesurées pour générer un champ magnétique à ondes progressives.

3. Procédé selon la revendication 1 ou 2, **caractérisé en ce que** la valeur de la position absolue, à chaque changement dans la combinaison de valeurs mesurées, est incrémentée de 1 dans le cas d'un mouvement vers l'avant de la partie secondaire et/ou décrémentée de 1 dans le cas d'un mouvement vers l'arrière, qu'un indice est déterminé à partir de la valeur de la position absolue et du nombre de combinaisons de valeurs de consigne enregistrées à l'aide d'une opération module et que la combinaison de valeurs de consignes associée à la valeur de la position absolue est déterminée à l'aide de l'indice et de la combinaison de valeurs mesurées qui se produit à la position de référence.

4. Procédé selon la revendication 1 ou 2, **caractérisé en ce qu'**après avoir constaté la situation de défaut, il se produit un nouveau déplacement jusqu'à la position de référence et la valeur de la position absolue à la position de référence est fixée à la valeur de la position de référence.

5. Procédé selon la revendication 1 ou 2, **caractérisé en ce que** des valeurs de la vitesse pour la vitesse relative entre la partie primaire et la partie secondaire sont déterminées à l'aide des valeurs mesurées d'au moins un détecteur de champ magnétique (H1, H2, H3) et de l'écart dans le temps que présentent ces valeurs mesurées entre elles, que les valeurs de la vitesse individuelles sont déterminées d'après des méthodes de mesure différentes, et que la méthode de mesure à employer à chaque fois est choisie en fonction d'une valeur de la vitesse déterminée lors d'une mesure précédente de la vitesse.

6. Procédé selon la revendication 5, **caractérisé en ce qu'**avec au moins une méthode de mesure, les valeurs de la vitesse sont déterminées avec une fréquence d'échantillonnage fixe à partir des valeurs mesurées de l'au moins un détecteur de champ magnétique (H1, H2, H3) en comptant les incréments sur la durée de l'échantillonnage et en divisant ensuite le nombre par la durée de l'échantillonnage.

7. Procédé selon la revendication 5, **caractérisé en ce qu'**avec au moins une méthode de mesure, l'intervalle de temps est déterminé entre au moins deux instants auxquels il se produit un changement des combinaisons de valeurs mesurées dans la séquence de mesure, qu'à l'aide des valeurs de la position absolue associées à ces instants est déterminé le trajet qu'a parcouru la partie secondaire par rapport à la partie primaire entre les instants, qu'une valeur de la vitesse pour la vitesse relative entre la partie primaire et la partie secondaire est déterminée à partir de l'intervalle de temps et du trajet et que la sélection des instants s'effectue de préférence en fonction d'une valeur de la vitesse qui a été déterminée lors d'une mesure précédente de la vitesse.

8. Procédé selon la revendication 7, **caractérisé en ce que** la sélection des instants sur lesquels se basent la détermination des valeurs de la vitesse est déterminée en fonction du niveau de tolérance de position des segments aimantés, des tolérances dans les dimensions et/ou dans la magnétisation des segments aimantés.

9. Procédé selon la revendication 7, **caractérisé en ce que** dans le cas d'une vitesse qui est inférieure à une valeur limite prédéfinie, l'intervalle de temps est déterminé entre des changements directement successifs de combinaisons de valeurs mesurées, et dans le cas d'une vitesse qui correspond à la valeur limite ou qui est supérieure à celle-ci, l'intervalle de temps est déterminé entre des changements de combinaisons de valeurs mesurées qui sont espacés les uns des autres dans la séquence de mesure.

10. Procédé selon la revendication 7, **caractérisé en ce que** les instants sont choisis de telle sorte qu'ils se trouvent à l'intérieur de fronts directement successifs montants, descendants et/ou orientés dans des directions opposées l'une à l'autre du signal de mesure d'au moins un détecteur de champ magnétique (H1, H2, H3).

Fig. 1

| Referenzsequenz | | | | |
|---|---|---|---|---|
| Index | Sollwert-kombination | Sollwert Sensor H3 | Sollwert Sensor H2 | Sollwert Sensor H1 |
| 0 | 5 | 0 | 0 | 1 |
| 1 | 1 | 0 | 1 | 1 |
| 2 | 3 | 0 | 1 | 0 |
| 3 | 2 | 1 | 1 | 0 |
| 4 | 6 | 1 | 0 | 0 |
| 5 | 4 | 1 | 0 | 1 |

## Fig. 2

| Absolut-positions-wert | Index | Sollwert-kombination | Messwert-kombination | Fehler-zustands-wert |
|---|---|---|---|---|
| | | – 1. Referenzfahrt – | | |
| 0000 | 0 | 5 | 5 | 0 |
| 0001 | 1 | 1 | 1 | 0 |
| 0002 | 2 | 3 | 3 | 0 |
| 0003 | 3 | 2 | 2 | 0 |
| ⋮ | ⋮ | ⋮ | ⋮ | ⋮ |
| 2836 | 4 | 6 | 6 | 0 |
| 2837 | 5 | 4 | 4 | 0 |
| | | – 1. Reset – | | |
| 2837 | 5 | 4 | 4 | 0 |
| 2838 | 0 | 5 | 5 | 0 |
| 2839 | 1 | 1 | 1 | 0 |
| ⋮ | ⋮ | ⋮ | ⋮ | ⋮ |
| 6003 | 3 | 2 | 2 | 0 |
| 6004 | 4 | 6 | 6 | 0 |
| | | – 2. Reset – | | |
| 6004 | 4 | 6 | 5 | 1 |
| | | – 2. Referenzfahrt – | | |
| 0000 | 0 | 5 | 5 | 0 |
| 0001 | 1 | 1 | 1 | 0 |
| 0002 | 2 | 3 | 3 | 0 |
| 0003 | 3 | 2 | 2 | 0 |

## Fig. 3

Fig. 4

Fig. 5

Fig. 6

EP 1 615 332 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0780964 A2